# EUROPEAN PATENT APPLICATION

(11) **EP 2 302 207 A1**
(43) Date of publication of application: **30.03.2011**
(21) Application number: 09012113.8
(22) Date of filing: 23.09.2009
(51) Int. Cl.: F03D 7/02, F03D 7/04

(54) **Power generating machine load control based on consumed fatigue life time and real-time of operation of a structural component**

(71) Applicant: Siemens Aktiengesellschaft, 80333 München (DE)
(72) Inventor: Egedal, Per, 7400 Herning (DK); Frydendal, Ib, 6683 Føvling (DK)

(57) **Abstract**

It is described a method for controlling the operation of a power generating machine (100) comprising a structural component (114, 120, 122), which during an operation of the power generating machine is exposed to a mechanical load. The method comprises (a) determining a consumed fatigue life time (254c) of the structural component, (b) determining a real-time of operation (256b) of the structural component, (c) comparing the determined consumed fatigue life time with the determined real-time of operation and (d) controlling the operation of the power generating machine in such a manner that the mechanical load acting on the structural component depends on a result of comparing the determined consumed fatigue life time with the determined real-time of operation. It is further described a machine load control system (150, 250), the power generating machine and a computer program, which are all adapted for carrying out and/or for controlling the above described operation control method.

## Description

### Field of invention

The present invention relates to the technical field of operating power generating machines such as wind turbines. In particular, the present invention relates to a method and to machine load control system for controlling the operation of a power generating machine comprising a structural component, which during an operation of the power generating machine is exposed to a mechanical load. Further, the present invention relates to a power generating machine such as a wind turbine and to a computer program, which are adapted for controlling or for carrying out the above mentioned mechanical load control method.

### Art Background

Rotor blades of wind turbine are exposed to large dynamic mechanical loads in particular when the wind turbine is operated in turbulent wind conditions or in conditions of flow distortion, e.g. high wind shear. Therefore, the rotor blades of wind turbine and the corresponding supporting structures have been dimensioned such as to be able to withstand all the dynamic loads that could occur under all conditions to which the wind turbine is certified. This means that wind turbines are designed for certain wind classes, and prior to installing a wind turbine at a given site, the wind conditions of the site have to be measured in a period of time to assure that the wind turbine, which is supposed to be installed at that site, is not overloaded.

However, in case of extreme wing conditions the wind load on the wind turbine must be reduced in order to avoid any damage of the wind turbine. An existing measure by which the wind load on wind turbine is reduced in high wind conditions is simply shutting down the wind turbine when the wind speed exceeds one or more threshold values.

However, it is also known to curtail the wind turbine. This means that the amount of power generation of the wind turbine is reduced in order to reduce the mechanical load which is acting on at least one structural component of the wind turbine.

Specifically, a wind turbine curtailment can comprise for instance stopping the turbine for predefined sectors or predefined wind directions, or running the wind turbine at a reduced power and speed in predefined sectors.

US 4,298,313 discloses a method for actively reducing the operational loads acting on rotor blades. The disclosed method is called cyclic blade pitch. In the cyclic blade pitch the blade pitch angle setting of each rotor blade is changed during each revolution.

EP 1 988 284 A1 discloses a method of operating a wind turbine, wherein for a reduction of a wind load impacting on the wind turbine the rotational speed of the rotor and/or the electrical power output of the wind turbine are reduced depending on a deviation of the wind speed from the average wind speed.

JP 2006241981 discloses an operation control method for a wind turbine. The disclosed method is used for optimally performing an operation control depending on degrees of fatigue deterioration of the wind turbine in order to operate the wind turbine by taking full advantage of fatigue life required for the wind turbine. Thereby, the operation rate of the wind turbine can be improved.

There may be a need for dynamically controlling the operation of a power generating machine in such a manner that (a) mechanical overloads, which act on a structural component of the power generating machine and which cause a significantly reduced fatigue life of the structural component can be avoided, and (b) the amount of power generation is reduced as little as possible.

### Summary of the Invention

This need may be met by the subject matter according to the independent claims. Advantageous embodiments of the present invention are described by the dependent claims.

According to a first aspect of the invention there is provided a method for controlling the operation of a power generating machine, in particular a wind turbine, wherein the power generating machine comprises a structural component, which during an operation of the power generating machine is exposed to a mechanical load. The provided method comprises (a) determining a consumed fatigue life time of the structural component, (b) determining a real-time of operation of the structural component, (c) comparing the determined consumed fatigue life time with the determined real-time of operation and (d) controlling the operation of the power generating machine in such a manner that the mechanical load acting on the structural component depends on a result of comparing the determined consumed fatigue life time with the determined real-time of operation.

The described mechanical load control method is based on the idea that the operation of a power generating machine can be adapted to mechanical load conditions of the structural component. Thereby, the consumed fatigue life time of the structural component is one main input which determines the operational mode of the power generating machine. A fatigue life time consumption rate may be optionally a further input for the described mechanical load control.

In this respect the term operational mode might refer to the operating conditions of the power generating machine, which of course have at least a certain impact on the mechanical load acting on the structural component. Based on the comparison result the power generating machine may be operated in a comparatively aggressive mode. This means that the disadvantage of a large fatigue life time consumption rate is compensated by a large power generation i.e. a large gain. Alternatively, the power generating machine may be operated in a comparatively gentle mode, which means that the advantage of only a small fatigue life time consumption rate is combined with the disadvantage of a comparatively small power generation.

The consumed fatigue life time, which may also called accumulated fatigue life time consumption, may be a fatigue life time consumption, which during a previous operation of the power generating machine, has been consumed or exhausted by the structural component. Accordingly, a remaining fatigue life time is the fatigue life time which the structural component is able to consume in the future before a damaging of the structural component is expected.

In this document the terms "consumed fatigue life time", "accumulated fatigue life time consumption" and "remaining fatigue life time" are related to the generally known term "fatigue life", which according to the American Society for Testing and Materials (ASTM) is defined as the number of stress cycles of a specified character that a structural component sustains before a failure of the structural component of a specified nature occurs. In this document the term "fatigue life" is also referred to as "fatigue life time".

The real-time of the operation of the structural component refers to the time difference between the actual calendar time and the point in calendar time, when the structural component has been put in operation.

The physical SI unit both for the "consumed fatigue life time", the "accumulated fatigue life time consumption" and the "remaining fatigue life time" is second. The unit for the fatigue life time consumption rate is 1 (i.e. second per second).

According to a further embodiment of the invention controlling the operation of the power generating machine comprises (a) operating the power generating machine with a first operational mode, if the determined consumed fatigue life time of the structural component is more than the determined real-time of operation of the structural component, and (b) operating the power generating machine with a second operational mode, if the determined consumed fatigue life time of the structural component is less than the determined real-time of operation of the structural component.

The first operational mode may be associated with a comparatively low threshold with respect to a fatigue life time consumption rate for activating a load reduction measure for a power generating machine operation and a comparatively high gain for reducing the power generation in case the mentioned threshold is exceeded. In case the power generating machine is-a wind turbine, in the first operational mode the threshold may be for instance a value of 1 s/s for the ratio between (a) the determined consumed fatigue life time of the structural component and (b) the determined real-time of operation of the structural component. Further, in the first operational mode the gain may be for instance a 4% reduction of power and/or rotational speed of the rotor of the wind turbine per fatigue life time consumption rate.

The second operational mode may be associated with a comparatively high threshold with respect to a fatigue life time consumption rate for activating a load reduction measure for a power generating machine operation and a comparatively low gain for reducing the power generation in case the mentioned threshold is exceeded. In case the power generating machine is a wind turbine, in the second operational mode the threshold may be for instance a value of 2 s/s for the ratio between (a) the determined consumed fatigue life time of the structural component and (b) the determined real-time of operation of the structural component. Further, in the second operational mode the gain may be for instance a 2% reduction of power and/or rotational speed of the rotor of the wind turbine per fatigue life time consumption rate.

Generally speaking, according to the described method a wind turbine load control can be accomplished by using a differential control based on (a) fatigue life time consumption rate input and real-time input and (b) a reduced turbine speed and/or a reduced power generation as output. Thereby, two different operational modes may be used for differentially controlling the turbine load. One first mode may be activated for a consumed fatigue life time which is more than real-time, and the other second mode may be activated for a consumed fatigue life time which is less than real time.

According to a further embodiment of the invention controlling the operation of the power generating machine comprises regularly adapting the operation of the power generating machine between the first operational mode and the second operational mode. This may provide the advantage that the mechanical load control for the power generating machine can be accomplished with a precise adjustment.

With respect to a discrete differential mechanical load control, which can be accomplished for instance with the above descried two operational modes for threshold and gain, the described regularly adaptation of the mechanical load control can be realized by replacing the discrete values for threshold and gain with a regular change of the values for threshold and gain.

In this respect the term regular may mean that at least within a predefined time period of operation of the power generating machine a setting for operating the machine is always, permanently and/or continuously adapted towards an optimized setting. Generally speaking, regularly may mean that the time interval between two subsequent adaptation procedures is small with respect to the time duration which is typically required for accomplishing a change of operational settings.

It is mentioned that the operational control of the power generating machine can also comprise two operational states. In a first operational state the power generating machine is operated with a predefined operational mode or with predefined operational setting(s). In the second operational state the power generating machine can be operated with different operational modes or operational settings, which are adapted or optimized based on the result of comparing the determined consumed fatigue life time with the determined real-time of operation.

It is further mentioned that parameter value(s) for the operational settings can be adapted continuously or in a step wise manner. This means that the adaptation of the operational mode or the operational setting may also include a jump of the respective parameter values for operating the power generating machine.

According to a further embodiment of the invention controlling the operation of the power generating machine comprises selecting a load reduction measure for operating the power generating machine from at least two predetermined load reduction measures based on the result of comparing the determined consumed fatigue life time with the determined real-time of operation. This may provide the advantage that depending on the specific operating conditions for the power generating machine an appropriate load reduction measure may be selected.

Typically, an execution of a load reduction measure will be associated with a reduction of the amount of power generation and/or of the rotational speed of the power generating machine.

It is mentioned that in this document a load reduction measure is also referred to a load reduction tool.

When employing the described load reduction measure selection it may be possible to select an optimum load reduction tool with respect to the loads acting on the power generating machine and/or on specific structural component(s). Thereby it may be possible to choose a load reduction tool that optimizes the relationship between (a) load reduction and (b) power loss. In case of a wind turbine it may be for instance more beneficial to use a cyclic pitch scheme for the adjustment of the blade pitch angle of the rotor blades instead of reducing the rotor speed or even shutting down the wind turbine.

According to a further embodiment of the invention the power generating machine is a wind turbine and the predetermined load reduction measures comprise at least one of the following measures: (a) stopping the operation of the wind turbine for a predetermined period of time, (b) reducing the speed of the wind turbine, (c) reducing the power being generated by the wind turbine, (d) changing the blade pitch angle of at least one rotor blade of the wind turbine, (e) changing the yaw angle of a nacelle of the wind turbine.

The operation of the wind turbine may be stopped if the above described load reduction measure requires a power and/or rotational speed reduction of at least 30%. This means that after the respective load reduction measure the remaining power and/or the remaining rotational speed is less than 70% with respect to the original or the nominal power generation of the wind turbine.

Reducing the speed of the wind turbine may particularly mean to reduce the rotational speed of the rotor of the wind turbine. Further, changing the blade pitch angle of at least one rotor blade of the wind turbine may comprise changing the blade pitch angle setting from an individual pitch to a cyclic pitch or vice versa.

In this respect the term "cyclic pitch" refers to a method wherein the blade pitch angle setting of each rotor blade is changed during each revolution. More details about "cyclic pitch" can be found for instance in the US 4,298,313.

It is pointed out that the mentioned list of control measures is not exclusive. In order to change the current mechanical load of the structural component a suitable adaptation of any arbitrary parameter of the wind turbine may be carried out, wherein the parameter adaptation results in a change of the current power generation of the wind turbine.

According to a further embodiment of the invention determining the consumed fatigue life time of the structural component comprises detecting a load cycle of the structural component based on a determined mechanical load acting on the structural component.

The described load cycle detection may be carried out by a load cycle detection unit being capable of detecting the mechanical load cycle which is currently acting on the structural component. Thereby, a load cycle may be defined by a time period spanning one at least one intermediary peak load acting on the structural component. For then real life time of the structural component the number of load cycles, which may impact on the structural component without causing a failure, are an important parameter. Of course, also the strengths of the respective load cycles are highly relevant.

The mechanical load which is acting on the structural component may be determined by a hard sensor and/or by a soft sensor.

In this respect a hard sensor may be any measuring instrument being capable of detecting a physical parameter of the structural component during the operation of the power generating machine. The hard sensor may be for instance a force meter, a pressure gauge, a strain gauge such as for instance a tensometer, an acceleration sensor, a proximity gauge, a displacement sensor and/or a temperature sensor. Thereby, a temperature sensor or preferably two temperature sensors may be used to determine thermal fluctuations and/or thermal gradients, which, because of a typical thermal expansion of the material of the structural component, may also cause a stress induced mechanical load on the structural component.

A soft sensor, which is often also called a virtual sensor, is a common name for software where several measurements are processed together. There may be dozens or even hundreds of measurements. The interaction of the signals being provided by one or more hard sensors can be used for calculating new quantities that need not be measured. Soft sensors may be especially useful in data fusion, where measurements of different characteristics and dynamics are combined.

According to a further embodiment of the invention determining the consumed fatigue life time of the structural component further comprises detecting a load cycle cumulation of the structural component based on the detected load cycle of the structural component.

The detection of a load cycle cumulation may provide the advantage that it is possible to operate the power generating machine based on instantaneous mechanical load conditions. This can be realized for instance with an Online Cyclic Counting Rate (OCCR) method, wherein a fatigue load acting on the structural component is continuously calculated and cumulated in order to yield a value being indicative for the so far cumulated life time consumption of the structural component. It is hereby possible to (online) control the power generating machine and to reduce the mechanical load in the same time the load is building up.

The OCCR method may rely on a time dependent mechanical load signal with a given sampling rate such as for instance 5 Hz. At each time step being given by the sampling rate the following five tasks may be carried out: (A) The cumulated mechanical load cycles are updated in load range bins. (B) Based on the cumulated cycles an equivalent load is calculated. (C) Based on the equivalent load and a predefined design load for the structural component the consumed life time of the structural component is calculated. (D) Based on the consumed life time the current life time consumption rate is calculated. (E) Based on the real-time, the consumed life time and the current life time consumption rate the power and rotor speed settings are determined for the next time step.

In the following 13 preferred embodiments for an OCCR method are described:
1) In general, the OCCR method may be used for determining an equivalent mechanical load of the structural component, which is subjected to a dynamic mechanical loading. The OCCR method may comprise (a) measuring a first measurement value of the mechanical load of the structural component and comparing the first measurement value with a first reference value, (b) first updating at least one count value representing the number of load half-cycles of the structural component based on the result of comparing, wherein the load half-cycles correspond to a predetermined range of mechanical loads and occur within a time period prior to the measurement of the first measurement value, and (c) determining a first equivalent mechanical load of the structural component based on the first updated count value.
2) The OCCR method may further comprise (a) updating the first reference value to a second reference value based on the result of comparing the first measurement value with the first reference value, (b) measuring a second measurement value of the mechanical load of the structural component, (c) comparing the second measurement value with the second reference value, (d) second updating the at least one count value representing the number of load half-cycles of the structural component based on the result of comparing the second measurement value with the second reference value, wherein the load half-cycles correspond to the predetermined range of mechanical loads and occur within a time period prior to the measurement of the second measurement value, and (e) determining a second updated equivalent mechanical load of the structural component based on the second updated count value.
3) First updating the at least one count value may comprise (a) increasing the at least one count value by one, if the first measurement value minus the first reference value is positive and falls within the predetermined range of mechanical loads, or (b) leaving the at least one count value unchanged, if the first measurement value minus the first reference value is positive and does not fall within the predetermined range of mechanical loads or if the first measurement value minus the first reference value is negative.
4) In case the at least one count value has been increased by one in course of the first updating, the second updating the at least one count value comprises (a) further increasing the at least one count value by one, if the second reference value minus the second measurement value is positive and falls within the predetermined range of mechanical loads, or (b) leaving the at least one count value unchanged, if the second reference value minus the second measurement value is positive and does not fall within the predetermined range of mechanical loads or if the first reference value minus the first measurement value is negative. Alternatively, in case the at least one count value has been left unchanged in course of the first updating, the second updating the at least one count value comprises (a) increasing the at least one count value by one, if the second measurement value minus the second reference value is positive and falls within the predetermined range of mechanical loads, or (b) further leaving the at least one count value unchanged, if the second measurement value minus the second reference value is positive and does not fall within the predetermined range of mechanical loads or if the second measurement value minus the second reference value is negative.
5) Updating the first reference value to the second reference value may comprise (a) setting the second reference value equal to the first measurement value, if the first measurement value minus the first reference value is positive and falls within the predetermined range of mechanical loads or if the first measurement value minus the first reference value is negative, or (b) setting the second reference value equal to the first reference value, if the first measurement value minus the first reference value is positive and does not fall within the predetermined range of mechanical loads.
6) First updating the at least one count value may comprise (a) increasing the at least one count value by one, if the first reference value minus the first measurement value is positive and falls within the predetermined range of mechanical loads, or (b) leaving the at least one count value unchanged, if the first reference value minus the first measurement value is positive and does not fall within the predetermined range of mechanical loads or if the first reference value minus the first measurement value is negative.
7) In case the at least one count value has been increased by one in course of the first updating, the second updating the at least one count value may comprise (a) further increasing the at least one count value by one, if the second measurement value minus the second reference value is positive and falls within the predetermined range of mechanical loads, or (b) leaving the at least one count value unchanged, if the second measurement value minus the second reference value is positive and does not fall within the predetermined range of mechanical loads or if the second measurement value minus the second reference value is negative. Alternatively, in case the at least one count value has been left unchanged in course of the first updating, the second updating the at least one count value may comprise (a) increasing the at least one count value by one, if the second reference value minus the second measurement value is positive and falls within the predetermined range of mechanical loads, or (b) further leaving the at least one count value unchanged, if the second reference value minus the second measurement value is positive and does not fall within the predetermined range of mechanical loads or if the second measurement value minus the second reference value is negative.
8) Updating the first reference value to the second reference value may comprise (a) setting the second reference value equal to the first measurement value, if the first reference value minus the first measurement value is positive and falls within the predetermined range of mechanical loads or if the first reference value minus the first measurement value is negative, or (b) setting the second reference value equal to the first reference value, if the first reference value minus the first measurement value is positive and does not fall within the predetermined range of mechanical loads.
9) At least one further count value may be associated with at least one further predetermined range of mechanical loads, the further predetermined range of mechanical loads comprising a lower bound which is higher than a lower bound of the predetermined range of mechanical loads. In this case the OCCR method may further comprise (a) further comparing the first measurement value with a further first reference value, (b) further first updating at least one further count value representing the number of further load half-cycles of the structural component based on the result of further comparing, wherein the further load half-cycles correspond to the further predetermined range of mechanical loads and occur within the time period prior to the measurement of the first measurement value, and (c) adapting the first updated count value, wherein determining the first equivalent mechanical load of the structural component is based on the adapted first updated count value and on the further first updated count value.
10) Adapting the first updated count value may comprise (a) decreasing the first updated count value by one, if the further first updating comprises increasing the at least one further count value and (b) leaving the first updated count value unchanged, if the further first updating comprises leaving the at least one further count value unchanged.
11) The OCCR method may further comprise (a) updating the further first reference value to a further second reference value based on the result of further comparing the first measurement value with the further first reference value, (b) further comparing the second measurement value with the further second reference value, (c) further second updating the at least one further count value representing the number of further load half-cycles of the structural component based on the result of comparing the second measurement value with the further second reference value, wherein the further load half-cycles correspond to the further predetermined range of mechanical loads and occur within a time period prior to the measurement of the second measurement value, and (d) adapting the second updated count value. Thereby, determining the second updated equivalent mechanical load of the structural component is based on the adapted second updated count value and the further second updated count value.
12) Adapting the second updated count value may comprise (a) decreasing the second updated count value by one, if the further second updating comprised increasing the at least one further count value and (b) leaving the second updated count value unchanged, if the further second updating comprised leaving the at least one further count value unchanged.
13) The OCCR method may further comprise triggering a signal indicating the first updated equivalent load and/or the second updated equivalent load exceeding a preset threshold value.

According to a further aspect of the invention there is provided a machine load control system for controlling the operation of a power generating machine such as a wind turbine, wherein the power generating machine comprises a structural component, which during an operation of the power generating machine is exposed to a mechanical load. The machine load control system comprises (a) a first determining unit for determining a consumed fatigue life time of the structural component, (b) a second determining unit for determining a real-time of operation of the structural component, (c) a data processing unit. The data processing unit is adapted for comparing the determined consumed fatigue life time with the determined real-time of operation and for controlling the operation of the power generating machine in such a manner that the mechanical load acting on the structural component depends on a result of comparing the determined consumed fatigue life time with the determined real-time of operation.

Also the described machine load control system is based on the idea that that the operation of a power generating machine can be adapted to mechanical load conditions of the structural component. Thereby, the consumed fatigue life time of the structural component is one main input value which determines the operational mode of the power generating machine. Based on the comparison result the power generating machine may be operated in a comparatively aggressive mode or in a comparatively gentle mode, which means that the advantage of only a small fatigue life time consumption rate is combined with the disadvantage of a comparatively small power generation.

According to a further aspect of the invention there is provided a power generating machine such as in particular a wind turbine. The power generating machine comprises a machine load control system as described above.

A wind turbine being equipped with the described machine load control system may provide the advantage that the wind turbines can be erected or installed also in places where the load conditions typically exceed the wind turbine design class without a static curtailment. The turbine (mechanical) load control may rely on a consumed fatigue life time of the structural component and, if applicable also on a fatigue life time consumption rate. The consumed fatigue life time and/or the fatigue life time consumption rate may be determined with the help of the above described Online Cyclic Counting Rate (OCCR) method.

The wind turbine loads may be reduced by reducing the rotational speed and/or the amount of power generation of the wind turbine. Thereby, rotational speed and power may be reduced proportionally. The speed and power reduction may be based on a differential or a continuous control with the fatigue life consumption rate of the structural component as an input parameter.

According to a further embodiment of the invention the structural component is a force, a stress and/or a pressure receiving element of a wind turbine.

The structural component may be for instance a rotor blade, a tower or a nacelle. The structural component may further be a part of the rotor of the wind turbine. In particular the structural component may a hub representing the anchor point for the rotor blades at the main shaft of the rotor. Further, the structural component may be the main shaft, a main bearing for the main shaft or a bed plate of the main bearing. Furthermore, the structural component may be a yaw bearing of the nacelle. Last but not least the structural component may be the gear box of the wind turbine or the electric generator of the wind turbine which is connected with the gear box.

Taking at least one of the above described wind turbine components as the structural component may provide the advantage that the above described operation of the wind turbine can be optimized in order to realize an optimized fatigue life time consumption of those components of a wind turbine, which usually undergo the strongest mechanical loads /fatigue and which therefore limit the economic life-time or at least the maintenance interval of the wind turbine.

According to a further aspect of the invention there is provided a computer program for controlling the operation of a power generating machine, in particular a wind turbine. The computer program, when being executed by a data processor, is adapted for controlling or for carrying out the method as described above.

As used herein, reference to a computer program is intended to be equivalent to a reference to a program element and/or to a computer readable medium containing instructions for controlling a computer system to coordinate the performance of the above described method.

The computer program may be implemented as computer readable instruction code in any suitable programming language, such as, for example, JAVA, C++, and may be stored on a computer-readable medium (removable disk, volatile or non-volatile memory, embedded memory/processor, etc.). The instruction code is operable to program a computer or any other programmable device to carry out the intended functions. The computer program may be available from a network, such as the World Wide Web, from which it may be downloaded.

The invention may be realized by means of a computer program respectively software. However, the invention may also be realized by means of one or more specific electronic circuits respectively hardware. Furthermore, the invention may also be realized in a hybrid form, i.e. in a combination of software modules and hardware modules.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this application.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Figure 1 shows a wind turbine according to an embodiment of the present invention.
Figure 2 shows in accordance with an embodiment of the present invention a block diagram of a wind turbine load control system.
Figure 3 shows a simulation for the life time consumption of a structural component as a function of real-time with and without a mechanical load control.

### Detailed Description

The illustration in the drawing is schematically. It is noted that in different figures, similar or identical elements are provided with reference signs, which are different from the corresponding reference signs only within the first digit.

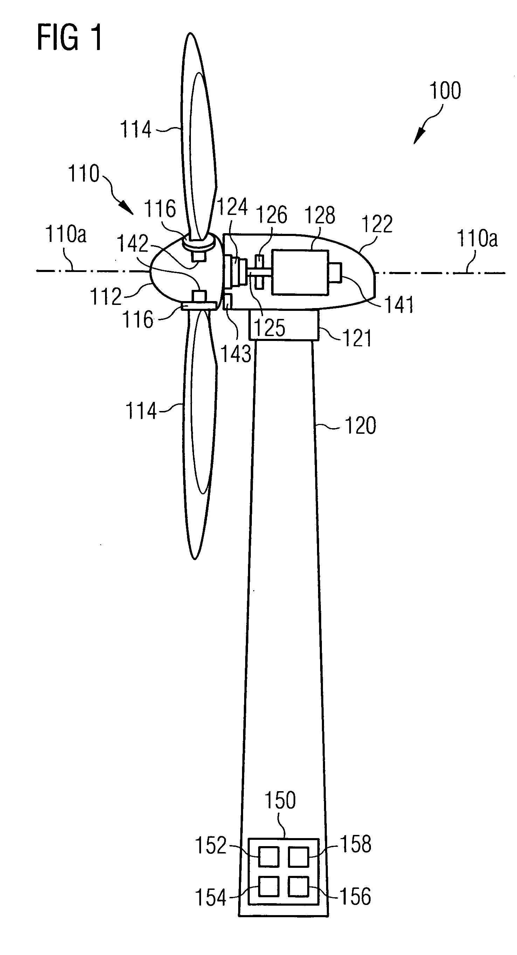

Figure 1 shows a wind turbine 100 according to an embodiment of the invention. The wind turbine 100 comprises a tower 120, which is mounted on a non-depicted fundament. On top of the tower 120 there is arranged a nacelle 122. In between the tower 120 and the nacelle 122 there is provided a yaw angle adjustment device 121, which is capable of rotating the nacelle 122 around a non depicted vertical axis, which is aligned with the longitudinal extension of the tower 120. By controlling the yaw angle adjustment device 121 in an appropriate manner it can be made sure, that during a normal operation of the wind turbine 100 the nacelle 122 is always properly aligned with the current wind direction. However, as will be described below in more detail, the yaw angle adjustment device 121 can be used to adjust the yaw angle to a position, wherein the nacelle is intentionally not perfectly aligned with the current wind direction.

The wind turbine 100 further comprises a rotor 110 having three blades 114. In the perspective of Figure 1 only two blades 114 are visible. The rotor 110 is rotatable around a rotational axis 110a. The blades 114, which are mounted at a driving collar 112, extend radial with respect to the rotational axis 110a.

In between the driving collar 112 and a blade 114 there is respectively provided a blade adjustment device 116 in order to adjust the blade pitch angle of each blade 114 by rotating the respective blade 114 around a non depicted axis being aligned parallel with the longitudinal extension of the blade 114. By controlling the blade adjustment device 116 the blade pitch angle of the respective blade 114 can be adjusted in such a manner that at least when the wind is not so strong a maximum wind power can be retrieved from the available wind power. However, as will be described below in more detail, the blade pitch angle can also be intentionally adjusted to a position, in which only a reduced wind power can be captured.

As can be seen from Figure 1, within the nacelle 122 there is provided a gear box 124. The gear box 124 is used to convert the number of revolutions of the rotor 110 into a higher number of revolutions of a shaft 125, which is coupled in a known manner to a generator 128. Further, a brake 126 is provided in order to stop the operation of the wind turbine 100 or to reduce the rotational speed of the rotor 110 for instance (a) in case of an emergency, (b) in case of too strong wind conditions, which might harm the wind turbine 100, and/or (c) in case of an intentional saving of the consumed fatigue life time and/or the fatigue life time consumption rate of at least one structural component of the wind turbine 100.

The wind turbine 100 further comprises a control system 150 for operating the wind turbine 100 in a highly efficient manner. Apart from controlling for instance the yaw angle adjustment device 121 the depicted control system 150 is also used for adjusting the blade pitch angle of the rotor blades 114 in an optimized manner. Further, as will be described below in more detail, the control system 150 is used for adjusting the yaw angle of the nacelle 122 respectively of the rotor 110.

For controlling the operation of the wind turbine 100 the control system 150 is connected to a rotational speed sensor 143, which is connected to the gear box 124. The rotational speed sensor 143 feeds a signal to the control system 150, which is indicative for the current rotational speed of the rotor 110.

Further, the control system 150 is connected to a power sensor 141 being connected to the generator 128. The power sensor 141 provides information about the current power production of the wind turbine 110.

Furthermore, the control system 150 is connected to angle sensors 142, which, according to the embodiment described here, are connected to the respective blade adjustment device 116. Therefore, the control system 150 always has a precise knowledge about the actual blade pitch angle settings of all rotor blades 114.

According to the embodiment described here the control system 150 is also used for selecting a load reduction measure for operating the wind turbine 100 in such a manner, that the consumed fatigue life time of the structural component will never be larger than the real-time of operation of the structural component.

Therefore, the control system can also be denominated a wind turbine load control system 150.

In order to perform a load control for at least one structural component of the wind turbine, the control system 150 comprises a fatigue sensing system 152 for generating reliable measurement values being indicative for the mechanical load acting on the at least one structural component. Further, the control system 150 comprises a load and conditioning system 154 for conditioning the generated measurement values. Further, the control system 150 comprises a strategy system 156 for selecting a load reduction measure for operating the wind turbine 100 in order to yield a reduced mechanical load acting on the structural component. Furthermore, the control system 150 comprises an executing system 158 for executing a selected load reduction measure.

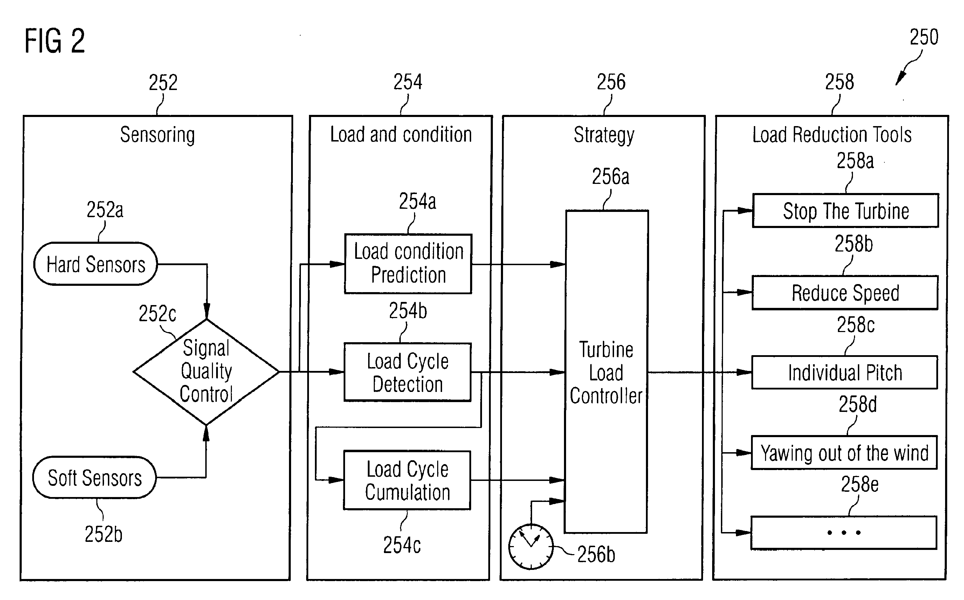

Figure 2 shows in accordance with an embodiment of the present invention a block diagram of a wind turbine load control system 250 for controlling a mechanical load reduction measure for at least one structural component of the wind turbine 100.

The wind turbine operation control starts with measuring mechanical loads, which are acting on a structural component of the wind turbine. As has already been mentioned above, according to the embodiment described here, the structural component is a rotor blade. However, the wind turbine load control system 250 can also be used for controlling a load reduction measure for other structural components such as for instance the nacelle 122 or the tower 120 of the respective load controlled wind turbine 100.

The control system 250 comprises (a) a fatigue sensing system 252 for generating reliable measurement values being indicative for the mechanical load acting on the at least one structural component, (b) a load and conditioning system 254 for conditioning the generated measurement values, (c) a strategy system 256 for selecting a load reduction measure and (d) an executing system 258 for executing a selected load reduction measure.

As can be seen from Figure 2, the fatigue sensing system 252 comprises hard sensors 252a such as for instance a force meter, a pressure gauge, a strain gauge (e.g. a tensometer), an acceleration sensor and/or a temperature sensor. Further, the mechanical load measurement comprises soft sensors 252b. The signal quality of the sensor signals provided from the hard sensors 252a and/or from the soft sensors 252b is checked with a signal quality control unit 252c. Thereby, measurement artifacts or apparent measuring errors can be filtered out.

The signal quality control unit 252c provides as an output signal a positively adjudged measurement signal being indicative for the current mechanical load acting on the respective structural component. The output signal is fed to the load and conditioning system 254.

The load and conditioning system 254 comprises a load condition prediction unit 254a, a load cycle detection unit 254b and a load cycle cumulation unit 254c. As can be seen from Figure 2, according to the embodiment described here, the output signal of the signal quality control unit 252c is specifically provided both to the load condition prediction unit 254a and to the load cycle detection unit 254b.

The load condition prediction unit 254a predicts the mechanical load condition of the respective structural component and feeds a corresponding signal to the strategy system 256, which in this document is also denominated as a selection system 256. According to the embodiment described here the strategy system or selection system 256 comprises a turbine load controller 256a, which is receiving the mentioned signal from the load condition prediction unit 254a. The turbine load controller may be implemented in a data processing unit 256a, which can be programmed in such a manner that the above described method for controlling the operation of the wind turbine can be carried out.

For realizing the load condition prediction unit 254a reference is made to EP 1 988 284 A1, which is mentioned above in the section "Art Background".

The load cycle detection unit 254b detects and evaluates the load cycle which is currently acting on the respective structural component and feeds a corresponding signal both to the turbine load controller 256a and to the above mentioned load cycle cumulation unit 254c. An output signal of the load cycle cumulation unit 254c, which is indicative for the accumulated fatigue life time consumption of the structural component is also fed to the turbine load controller 256a.

The load cycle cumulation unit respectively the first determining unit 254c is adapted to perform an Online Cyclic Counting Rate (OCCR) method. The basic concept and various preferred embodiments of the OCCR method are described above in this document in the section "Summary of the Invention".

Further, a second determining unit 256b feeds a signal being indicative for the real-time of operation of the structural component to the turbine load controller 256a. According to the embodiment described here the second determining unit 256b is a simple clock.

Based on the four output signals provided (a) by the load condition prediction unit 254a, (b) by the load cycle detection unit 254b, (c) by the first determining unit respectively the load cycle cumulation unit 254c and by (d) the second determining unit respectively the clock 256b turbine load controller 256a selects at least one measure for reducing the mechanical load acting on the respective structural component. Thereby, the determined consumed fatigue life time of the respective structural component is compared with the determined real-time of operation of the respective structural component and the at least one measure for reducing the mechanical load is selected based on the respective comparison result.

A selection signal corresponding to the selected load reduction measure is generated by the turbine load controller 256a and is provided to the executing system 258. The executing system 258 is capable of triggering different load reduction measures or load reduction tools, which are described in the following paragraph.

A very aggressive load reduction tool is simply to stop the operation of the wind turbine. This is indicated with reference numeral 258a. Further load reduction tools or load reduction measures are reducing the rotor speed (reference numeral 258b), adapting the individual blade pitch angle (reference numeral 258c) and/or adjusting the yawing angle (reference numeral 258d). It is mentioned that the given list of load reduction tools is not exclusive. In order to reduce the current mechanical load acting on the structural component a suitable adaptation of any arbitrary operational parameter of the wind turbine may be carried out, wherein the parameter adaptation results in a change of the current power generation of the wind turbine. Therefore, reference numeral 258e indicates other not explicitly described load reduction tools.

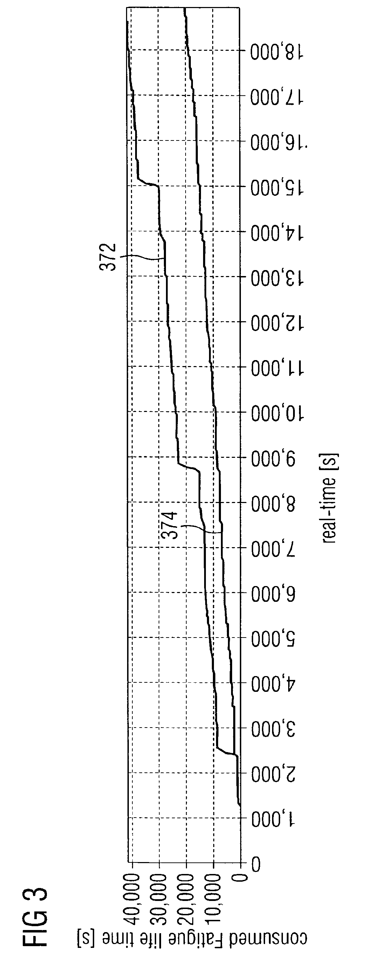

Figure 3 shows a diagram depicting a simulation for the life time consumption of a structural component as a function of the real-time of operation of the structural component. On the abscissa of the diagram there is plotted the real-time of operation of a structural component of a wind turbine. On the ordinate there is plotted the consumed fatigue life time of the respective structural component.

Curve 372 shows the fatigue life time consumption if the wind turbine is running at 100% power setting at all times. This means that there is no mechanical load control which takes care that the fatigue life time consumption rate is kept within reasonable limits.

As can be seen from Figure 3, the curve 372 basically comprises a continuous ascent with three quasi step wise jumps. These jumps indicate exceptional wind forces, which cause an exceptional high fatigue life time consumption rate for the respective structural component of the wind turbine.

Curve 374 shows the fatigue life time consumption of the structural component with a turbine load control in accordance with an embodiment of the invention. The mechanical load control takes care that the fatigue life time consumption rate is never exceeding the real-time of operation. This can be directly seen from curve 374, which runs significantly below curve 372.

In particular, in curve 374 there are no jumps. When there is an exceptional large wind force driving the wind turbine an appropriate load reduction measure is temporarily activated by the mechanical load control in order to keep the fatigue life time consumption rate always within reasonable limits.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method for controlling the operation of a power generating machine (100), in particular a wind turbine (100), wherein the power generating machine (100) comprises a structural component (114, 120, 122), which during an operation of the power generating machine (100) is exposed to a mechanical load, the method comprising
• determining a consumed fatigue life time (254c) of the structural component (114, 120, 122),
• determining a real-time of operation (256b) of the structural component (114, 120, 122),
• comparing the determined consumed fatigue life time with the determined real-time of operation and
• controlling the operation of the power generating machine (100) in such a manner that the mechanical load acting on the structural component (114, 120, 122) depends on a result of comparing the determined consumed fatigue life time with the determined real-time of operation.

2. The method as set forth in the preceding claim, wherein controlling the operation of the power generating machine (100) comprises
- operating the power generating machine (100) with a first operational mode, if the determined consumed fatigue life time of the structural component (114, 120, 122) is more than the determined real-time of operation of the structural component (114, 120, 122), and
- operating the power generating machine with a second operational mode, if the determined consumed fatigue life time of the structural component (114, 120, 122) is less than the determined real-time of operation of the structural component (114, 120, 122).

3. The method as set forth in any one of the preceding claims, wherein
controlling the operation of the power generating machine (100) comprises
- regularly adapting the operation of the power generating machine (100) between the first operational mode and the second operational mode.

4. The method as set forth in any one of the preceding claims, wherein
controlling the operation of the power generating machine (100) comprises
- selecting a load reduction measure (258a, 258b, 258c, 258d, 258e) for operating the power generating machine (100) from at least two predetermined load reduction measures based on the result of comparing the determined consumed fatigue life time with the determined real-time of operation.

5. The method as set forth in the preceding claim, wherein the power generating machine is a wind turbine (100) and
the predetermined load reduction measures comprise at least one of the following measures:
- stopping the operation (258a) of the wind turbine (100) for a predetermined period of time,
- reducing the speed (258b) of the wind turbine (100),
- reducing the power being generated by the wind turbine (100),
- changing the blade pitch angle (258c) of at least one rotor blade of the wind turbine (100),
- changing the yaw angle (258d) of a nacelle (122) of the wind turbine (100).

6. The method as set forth in any one of the preceding claims, wherein
determining the consumed fatigue life time of the structural component (114, 120, 122) comprises
- detecting a load cycle (254b) of the structural component (114, 120, 122) based on a determined mechanical load acting on the structural component (114, 120, 122).

7. The method as set forth in the preceding claim, wherein determining the consumed fatigue life time of the structural component (114, 120, 122) further comprises
• detecting a load cycle cumulation (254c) of the structural component (114, 120, 122) based on the detected load cycle of the structural component (114, 120, 122).

8. A machine load control system for controlling the operation of a power generating machine (100), in particular a wind turbine (100), wherein the power generating machine (100) comprises a structural component (114, 120, 122), which during an operation of the power generating machine (100) is exposed to a mechanical load, the machine load control system (250) comprising
• a first determining unit (254c) for determining a consumed fatigue life time of the structural component (114, 120, 122),
• a second determining unit (256b) for determining a real-time of operation of the structural component (114, 120, 122),
• a data processing unit (256a)
- for comparing the determined consumed fatigue life time with the determined real-time of operation and
- for controlling the operation of the power generating machine (100) in such a manner that the mechanical load acting on the structural component (114, 120, 122) depends on a result of comparing the determined consumed fatigue life time with the determined real-time of operation.

9. A power generating machine, in particular a wind turbine (100), the power generating machine (100) comprising
• a machine load control system (250) as set forth in the preceding claim.

10. The power generating machine as set forth in the preceding claim, wherein
the structural component (114, 120, 122) is a force, a stress and/or a pressure receiving element of a wind turbine (100).

11. A computer program for controlling the operation of a power generating machine (100), in particular a wind turbine (100), the computer program, when being executed by a data processor, is adapted for controlling or for carrying out the method as set forth in any one of the claims 1 to 7.
